# EUROPEAN PATENT APPLICATION

(11) **EP 4 742 696 A1**
(43) Date of publication of application: **13.05.2026**
(21) Application number: 24849352.0
(22) Date of filing: 11.06.2024
(51) Int. Cl.: H04R 1/10, H04R 1/28, H04R 1/44

(54) **SEALING STRUCTURE AND ELECTRONIC DEVICE INCLUDING SAME**

(30) Priority: 31.07.2023 KR 20230099530; 08.09.2023 KR 20230119497
(71) Applicant: Samsung Electronics Co., Ltd., Suwon-si, Gyeonggi-do 16677 (KR)
(72) Inventor: AHN, Byungwoo, Suwon-si Gyeonggi-do 16677 (KR); HEO, Kyungman, Suwon-si Gyeonggi-do 16677 (KR); KANG, Taehwan, Suwon-si Gyeonggi-do 16677 (KR); KANG, Haewoong, Suwon-si Gyeonggi-do 16677 (KR); KO, Junho, Suwon-si Gyeonggi-do 16677 (KR); SONG, Dongchul, Suwon-si Gyeonggi-do 16677 (KR); AN, Youngjun, Suwon-si Gyeonggi-do 16677 (KR); LEE, Hunki, Suwon-si Gyeonggi-do 16677 (KR)
(74) Representative: Gulde & Partner
(86) International application number: PCT/KR2024/007951
(87) International publication number: WO 2025/028781

(57) **Abstract**

According to an embodiment of the present disclosure, an electronic device may comprise a housing, a sound housing, a sound output module, or a sealing structure. The housing may include at least one sound hole. The sound housing may include a conduit. The sound output module may be configured to output sound to the outside of the electronic device through the conduit and the at least one sound hole. The sealing structure may include an elastic member, a mesh member, or an adhesive member. The mesh member may be integrally formed with the elastic member. The adhesive member may be configured to bond the elastic member and the housing. The elastic member may include a body portion or at least one first opening. Various other embodiments may be possible.

## Description

### [Technical Field]

Various embodiments of the disclosure relate to an electronic device, e.g., a sealing structure and an electronic device including the same.

### [Background Art]

With the remarkable advancement of information and communication technology and semiconductor technology, the distribution and use of various electronic devices are rapidly increasing. In particular, recent electronic devices are being developed to be portable and capable of communication.

An electronic device may refer to a device that performs a specific function according to a mounted program, such as home appliances, electronic organizers, portable multimedia players, mobile communication terminals, tablet PCs, video/audio devices, desktop/laptop computers, or vehicle navigation systems. For example, such electronic devices may output stored information as sound or video. As the integration density of electronic devices increases and ultra-high-speed, high-capacity wireless communication becomes common, recently, various functions may be mounted on a single electronic device such as a mobile communication terminal. For example, not only a communication function but also an entertainment function such as a game, a multimedia function such as music/video playback, a communication and security function for mobile banking, and a schedule management or electronic wallet function are being integrated into a single electronic device.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

According to an embodiment of the disclosure, an electronic device may include a housing, a sound housing, a sound output module, or a sealing structure. The housing may include at least one sound hole. The sound housing may be disposed in the housing. The sound housing may include a conduit. The sound output module may be disposed in the sound housing. The sound output module may be configured to output a sound to an outside of the electronic device through the conduit and the at least one sound hole. The sealing structure may be disposed between the conduit and the at least one sound hole. The sealing structure may include an elastic member, a mesh member, or an adhesive member. The mesh member may be integrally formed with the elastic member. The adhesive member may be configured to adhere to the elastic member and the housing. The elastic member may include a body portion or at least one first opening. The at least one first opening may be formed in the body portion. A size of the at least one first opening may be enlarged in a direction away from the mesh member.

According to an embodiment of the disclosure, a sealing structure of an electronic device may include an elastic member or a mesh member. The elastic member may include a body portion, at least one first opening, or a protruding portion. The at least one first opening may be formed in the body portion. The protruding portion may protrude from the body portion. The mesh member may be integrally formed with the elastic member. At least a portion of the mesh member may be surrounded by the body portion. A remaining portion of the mesh member may be located on the at least one first opening.

### [Brief Description of Drawings]

FIG. 1 is a block diagram illustrating an electronic device in a network environment according to an embodiment.
FIG. 2 is a view illustrating an electronic device according to an embodiment of the disclosure.
FIG. 3 is a perspective view illustrating an electronic device according to an embodiment of the disclosure.
FIG. 4 is an exploded perspective view illustrating an electronic device according to an embodiment of the disclosure.
FIG. 5 is a cross-sectional view taken along line A-A' of FIG. 3, according to an embodiment of the disclosure.
FIG. 6 is an enlarged view illustrating portion B of FIG. 5 according to an embodiment of the disclosure.
FIG. 7 is a perspective view illustrating a sealing structure according to an embodiment of the disclosure.
FIG. 8 is a cross-sectional view illustrating the sealing structure taken along line C-C' of FIG. 7, according to an embodiment of the disclosure.
FIG. 9 is a cross-sectional view illustrating a sealing structure according to an embodiment of the disclosure.
FIG. 10 is a cross-sectional view illustrating a sealing structure according to an embodiment of the disclosure.
FIG. 11 is a cross-sectional view illustrating a sealing structure according to an embodiment of the disclosure.

### [Mode for Carrying out the Invention]

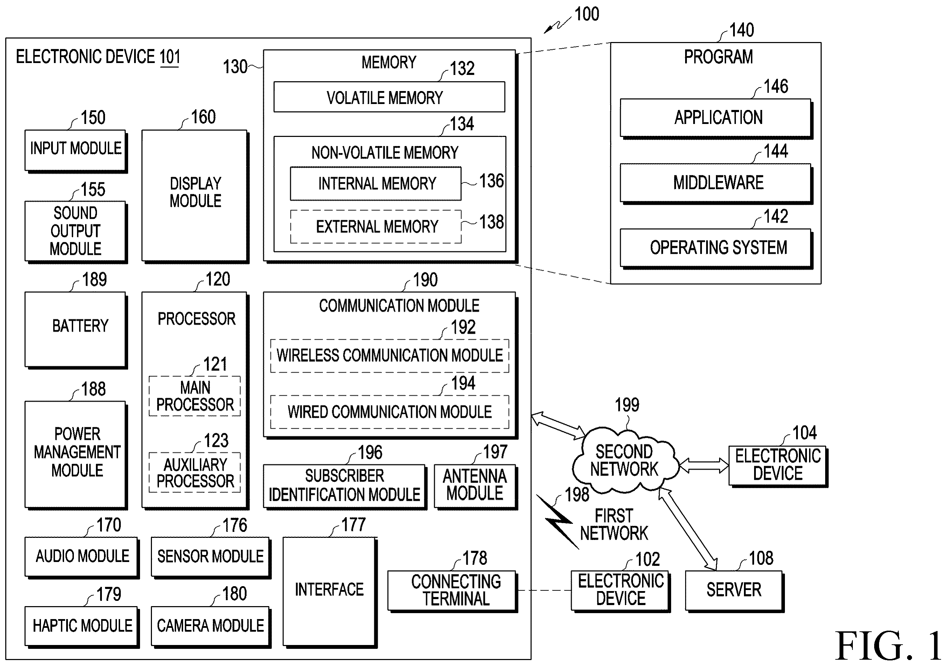

FIG. 1 is a block diagram illustrating an electronic device 101 in a network environment 100, according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

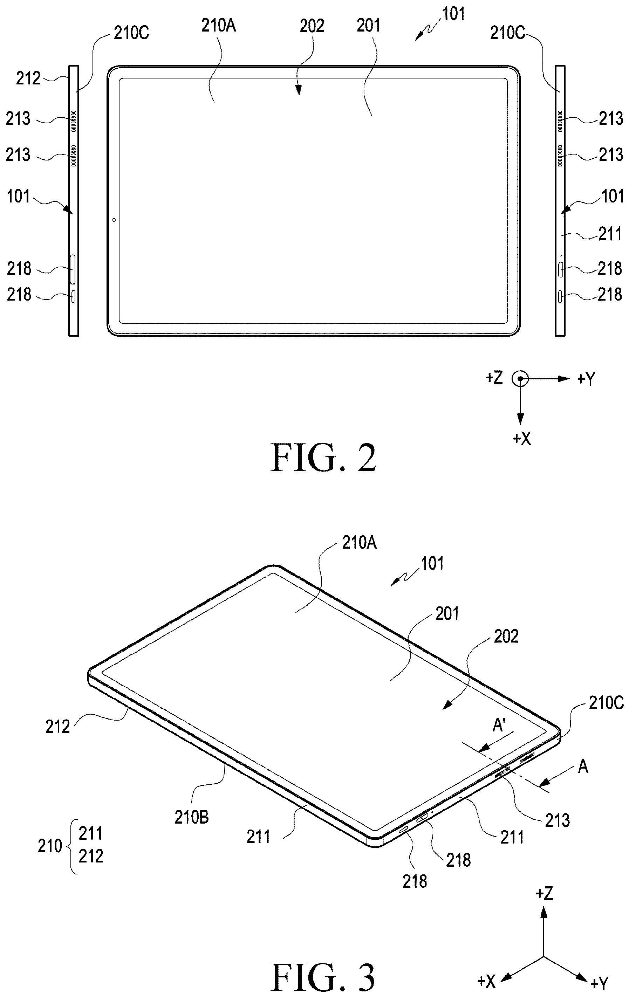

FIG. 2 is a view illustrating an electronic device according to an embodiment of the disclosure.

FIG. 3 is a perspective view illustrating an electronic device according to an embodiment of the disclosure.

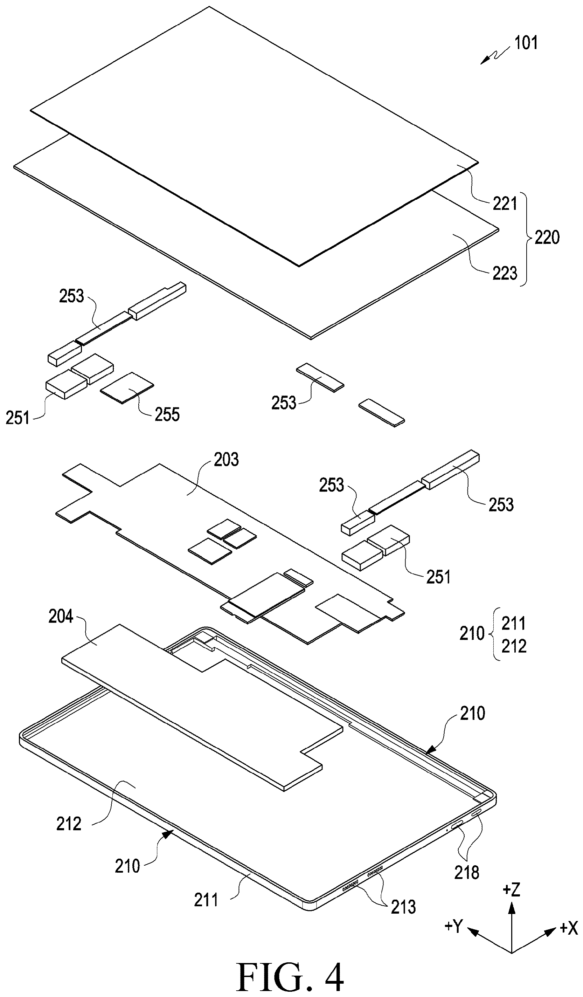

The embodiments of FIGS. 2 and 3 may be combined with the embodiment of FIG. 1 or the embodiments of FIGS. 4 to 11. The configuration of the electronic device 101 of FIGS. 2 and 3 may be identical in whole or part to the configuration of the electronic device 101 of FIG. 1.

Referring to FIGS. 2 and 3, an electronic device 101 (e.g., the electronic device 101 of FIG. 1) may include a display 201, a front plate 202, and a housing 210 including a first surface (or front surface) 210A, a second surface (or rear surface) 210B, and a side surface 210C surrounding a space between the first surface 210A and the second surface 210B. According to an embodiment (not illustrated), the housing 210 may denote a structure forming the first surface 210A of FIG. 2, the second surface 210B of FIG. 3, and some of the side surfaces 210C.

According to an embodiment, the front plate 202 may form at least a portion of the first surface 210A. According to an embodiment, the front plate 202 may be a glass plate or a polymer plate, at least a portion of which is substantially transparent, and may include various coating layers. The front plate 202 may be referred to as, e.g., a window plate (e.g., the window plate 221 of FIG. 4) and may form an exterior of the electronic device 101 together with the housing 210. In an embodiment, a display panel (e.g., the display panel 223 of FIG. 4) may be disposed on an inner surface of the front plate 202, and according to the embodiment, the front plate 202 itself and/or a combination of the front plate 202 and the display panel (e.g., the display panel 223 of FIG. 4) may be referred to as a 'display'.

According to an embodiment, the second surface (or rear surface) 210B of the electronic device 101 may be formed by a rear plate 212 (e.g., the rear plate 212 of FIG. 4) provided as a portion of the housing 210. The rear plate 212 may be formed of a substantially opaque material, e.g., coated or tinted glass, ceramic, polymer, metal (e.g., aluminum, stainless steel (STS), or magnesium), or a combination of at least two of the materials.

In an embodiment, the side surface 210C of the electronic device 101 may be formed by a side structure 211 (or "bezel structure") that at least partially surrounds a space between the front plate 202 and the rear plate 212. For example, the front plate 202 may be coupled to the side structure 211 and disposed to face the rear plate 212 with a predetermined gap therebetween. In an embodiment, the side structure 211 may be provided as a component separate from the rear plate 212 and may be coupled to the rear plate 212 through a separate assembly process to form the housing 210. In an embodiment, the side structure 211 may be manufactured or formed integrally with the rear plate 212 and may include the same material (e.g., a metallic material such as aluminum). In an embodiment, the rear plate 212 and/or the side structure 211 may at least partially include an electrically conductive material, a metallic material, and/or a polymer material. When the rear plate 212 and/or the side structure 211 include an electrically conductive material, the housing 210 may at least partially function as a radiating conductor of an antenna that transmits and receives wireless signals, and/or may function as a ground or electromagnetic shielding structure of the electronic device 101.

In the illustrated embodiment, the front plate 202 and/or the rear plate 212 are substantially in a flat plate shape, but it is noted that embodiments disclosed in the disclosure are not limited thereto. For example, the front plate 202 and/or the rear plate 212 may have a generally flat plate shape, but at least a portion of an edge thereof may have a curved shape, and the side structure 211 connecting the edges of the front plate 202 and the rear plate 212 may have a curved shape. In an embodiment, a thickness of the electronic device 101, e.g., a thickness measured along a Z-axis direction, at a central portion of the front plate 202 may be greater than a thickness measured at an edge of the front plate 202. For example, the thickness of the electronic device 101 may gradually decrease toward an edge at the first surface 210A. When the front plate 202, the rear plate 212, and/or the side structure 211 have a curved shape in the exterior of the electronic device 101, a comfortable grip may be provided to a user.

According to an embodiment, the electronic device 101 may include a display 201 (e.g., the display module 160 of FIG. 1 or the display 220 of FIG. 4), an audio module (e.g., the audio module 170 of FIG. 1), and/or a key input device 218, and may include at least one of a sensor module (e.g., the sensor module 176 of FIG. 1), a camera module (e.g., the camera module 180 of FIG. 1), a light emitting element, and a connector hole (e.g., the connecting terminal 178 of FIG. 1), which are not illustrated. In an embodiment, the electronic device 101 may omit at least one of the components (e.g., the key input device 218 or the light emitting element) or may additionally include another component.

The display 201 may be visually exposed through a significant portion of the front plate 202. In an embodiment, at least a portion of the display 201 may be visually exposed through the front plate 202 forming the first surface 210A, or through a portion of the side surface 210C. In an embodiment, the edge of the display 201 may be formed to be substantially the same in shape as an adjacent outer edge of the front plate 202. In an embodiment (not illustrated), the interval between the outer edge of the display 201 and the outer edge of the front plate 202 may remain substantially even to give a larger area of visual exposure of the display 201.

According to an embodiment, the display 201 may include, e.g., a display panel (e.g., the display panel 223 of FIG. 4) disposed on an inner side of the front plate 202 and may output visual information such as text, images, and/or videos through a substantial portion of the front plate 202. In an embodiment, substantially an entire area of the front plate 202 may be set as an area for outputting a screen. The area for outputting a screen may be formed to be generally the same as a shape of an edge of the front plate 202. In an embodiment (not illustrated), a gap between the area for outputting a screen and an outer edge of the front plate 202 may be formed to be generally the same, thereby increasing a ratio of the area for outputting a screen to an area provided by the front plate 202.

In an embodiment, a recess or an opening may be formed in a portion of a screen display area of the display 201, and the electronic device 101 may include at least one of an audio module, a sensor module, a camera module, and a light emitting element aligned with the recess or the opening. In an embodiment, the electronic device 101 may include at least one of an audio module, a sensor module, a camera module, a fingerprint sensor, and a light emitting element disposed to face a direction opposite to a screen output direction of the display 201. In an embodiment, the electronic device may include at least one of an audio module, a sensor module, a camera module, and a light emitting element disposed on an inner side of the screen display area of the display 201 while facing the same direction as the screen output direction. For example, the camera module may be disposed to overlap the screen display area and may not be visually exposed to the outside, and may include a hidden under display camera (UDC).

In an embodiment, the display 201 may be combined with or disposed adjacent to a touch sensing circuit, a pressure sensor capable of measuring a touch intensity (pressure), and/or a digitizer for detecting a magnetic-type stylus pen. In an embodiment, at least a portion of the sensor module and/or at least a portion of the key input device may be disposed on an inner side of the display.

In an embodiment, the display 201 may include a display (e.g., a flexible display) disposed to be slidably movable on the housing 210 to provide a screen (e.g., a screen display area). For example, the screen display area of the electronic device 101 is an area that is visually exposed and enables an image to be output. The electronic device 101 may decrease or increase the screen display area according to movement of a sliding plate (not shown) or movement of the display 201. For example, the electronic device 101 may include a rollable electronic device configured to selectively expand the screen display area as at least a portion (e.g., the housing) of the electronic device 101 is operated to be at least partially slidable. For example, the display 201 may be referred to as a slide-out display or an expandable display.

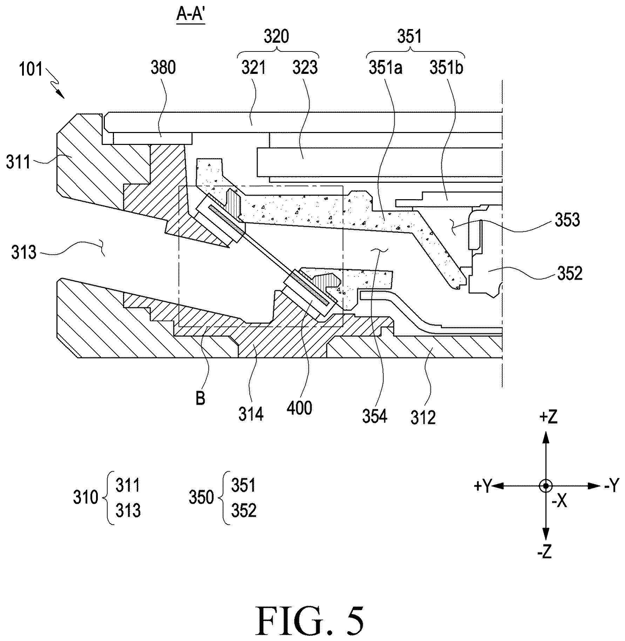

According to an embodiment, an audio module (e.g., the audio module 170 of FIG. 1) may include an audio hole 213. In an embodiment, the audio hole 213 may include a microphone hole and a speaker hole (e.g., the sound hole 313 of FIG. 5). A microphone for obtaining external sound may be disposed inside the microphone hole, and in an embodiment, a plurality of microphones may be disposed to detect a direction of sound. The speaker holes may include an external speaker hole and a phone receiver hole. In an embodiment, the speaker hole and the microphone hole may be implemented as a single hole, or a speaker may be included without a speaker hole (e.g., a piezo speaker). In the illustrated embodiment, the audio hole 213 is illustrated as a hole penetrating through the side surface 210C of the electronic device, e.g., the side structure 211 (e.g., the side structure 211 of FIG. 4), but it is noted that an embodiment of the disclosure is not limited thereto. For example, when providing a voice call function, the electronic device 101 may further include an audio hole (not illustrated) in the form of a hole penetrating through the front plate 202. The number and position of the audio hole may be varied considering a shape, functions, and/or an actual use environment of the electronic device 101.

According to an embodiment, the sensor module (not illustrated) may generate an electrical signal or a data value corresponding to an internal operating state of the electronic device 101 or an external environmental state. The sensor module may include sensors for detecting the operating environment of the electronic device 101, such as a proximity sensor, an illuminance sensor, and a temperature/barometric pressure sensor, and may include sensors for obtaining the user's biometric information, such as a fingerprint sensor or an HRM sensor. Further, other various types of sensors, such as a gesture sensor, a gyro sensor, a magnetic sensor, an acceleration sensor, a grip sensor, a color sensor, an infrared (IR) sensor, or a humidity sensor, may be equipped in the electronic device 101. The arrangement of the sensor modules may be appropriately selected considering an actual use environment of the electronic device and the function provided in the electronic device.

According to an embodiment, a camera module may be disposed on at least one of the first surface 210A, which is a front surface of the electronic device 101, and the second surface 210B, which is a rear surface, and according to the embodiment, a plurality of camera modules may be disposed to face the same direction. In an embodiment, the camera module may include a flash that provides illumination toward a subject. The camera module may include, e.g., one or more lenses, an image sensor, and/or an image signal processor. The flash may include, e.g., a light emitting diode or a xenon lamp.

According to an embodiment, the key input device 218 may be disposed on the side surface 210C of the electronic device 101 and/or the housing 210. In an embodiment, the electronic device 101 may exclude all or some of the above-mentioned key input devices 218 and the excluded key input devices 218 may be implemented in other forms, e.g., as soft keys, on the display 201. The number or position of the key input device 218 is not limited to the illustrated embodiment and may be additionally installed on the first surface 210A or the second surface 210B of the electronic device and/or the side surface 210C that is not illustrated. In an embodiment, a portion of the key input device 218 of FIG. 2 may be redisposed with a slot or a connector hole. For example, the electronic device 101 may receive a user identification module card or a memory card through a slot formed to penetrate through the side structure 211, and may transmit/receive power, an audio signal, and/or data with an external electronic device through a connector hole.

According to an embodiment, a light emitting element may be disposed on the first surface 210A and/or the second surface 210B of the electronic device 101. The light emitting element may provide, e.g., information about the state of the electronic device 101 in the form of light. In an embodiment, the light emitting element may provide a light source linked with an operation of the camera module, for example. The light emitting element may include, e.g., an light emitting device (LED), an infrared (IR) LED, or a xenon lamp.

FIG. 4 is an exploded perspective view illustrating an electronic device according to an embodiment of the disclosure.

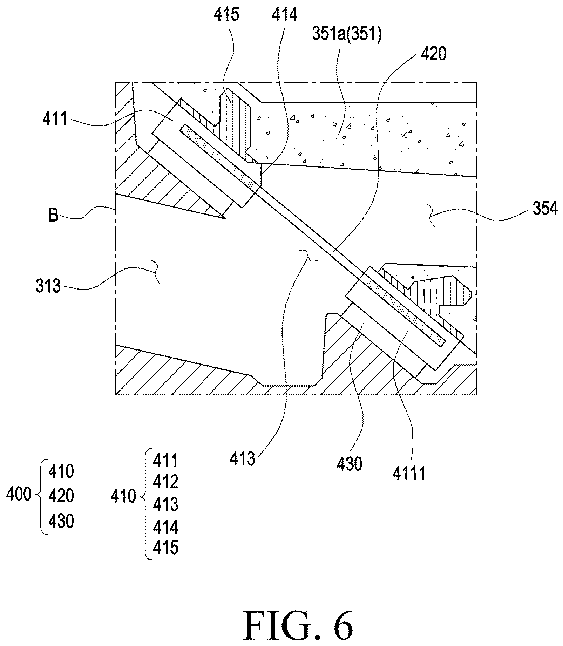

The embodiment of FIG. 4 may be combined with the embodiments of FIGS. 1 to 3 or the embodiments of FIGS. 6 to 11.

Referring to FIG. 4, an electronic device 101 (e.g., the electronic device 101 of FIG. 1 or the electronic device 101 of FIGS. 2 to 3) may include a housing 210 (e.g., the housing 210 of FIGS. 2 and/or 3), a display 220 (e.g., the display 201 of FIG. 3), a printed circuit board 203 (e.g., a printed circuit board (PCB), a printed board assembly (PBA), a flexible PCB (FPCB), or a rigid-flexible PCB (RFPCB)), a battery 204, a speaker module 251 (e.g., the sound output module 155 of FIG. 1), and an antenna 253. In an embodiment, the electronic device 101 may omit at least one of the components or may additionally include another component (e.g., a bracket for supporting or protecting the display 220). According to an embodiment, the electronic device 101 may have at least one hinge structure and may have a structure in which housings divided into a plurality of areas are folded. For example, according to a change in the state of the hinge structure (e.g., a folded state, an intermediate state, or an unfolded state), the state of the display operatively connected to the housing may change. For example, the first display corresponding to the first housing and the second display corresponding to the second housing may be changed to face each other or to be spaced apart from each other. According to an embodiment, at least one of the components of the electronic device 101 may be the same or similar to at least one of the components of the electronic device 101 of FIG. 2 or 3 and no duplicate description is made below.

According to an embodiment, the housing 210 may include a rear plate 212 (e.g., the rear plate 212 of FIGS. 2 to 3) and a side structure 211 (e.g., the side structure 211 of FIGS. 2 to 3) extending from the rear plate 212 along a thickness direction (e.g., a Z-axis direction). In an embodiment, the side structure 211 may be manufactured as a component separate from the rear plate 212 and may be coupled to the rear plate 212 to form the housing 210. In an embodiment, the side structure 211 and the rear plate 212 may be manufactured and formed as an integral component. Although not illustrated, the housing 210 may further include a supporting member (not illustrated) that isolates the display 220 (e.g., the display panel 223) from a space in which the printed circuit board 203 or the battery 204 is accommodated, and the supporting member may be in the form of a flat plate formed integrally with the side structure 211. In embodiments described below, the rear plate 212 of FIG. 4 and the rear plate 212 of FIG. 3 may be interpreted as being substantially the same.

According to an embodiment, the rear plate 212 and/or the side structure 211 may be formed of a metallic material and/or a non-metallic material (e.g., polymer). For example, the housing 210 may at least partially include an electrically conductive material. In an embodiment, when the rear plate 212 includes an electrically conductive material, the housing 210 may be utilized as a structure that at least partially provides an electromagnetic shielding structure. In an embodiment, when the side structure 211 includes an electrically conductive material, at least a portion of the side structure 211 may be utilized as a radiating conductor that transmits and receives radio waves. In an embodiment, when a supporting member (not illustrated) is disposed between the printed circuit board 203 and the display panel 223 and the supporting member includes an electrically conductive material, the supporting member may provide a ground conductor or an electromagnetic shielding structure of the electronic device 101.

According to an embodiment, the display 220 (e.g., the display module 160 of FIG. 1 or the display 201 of FIGS. 2 to 3) may include a window plate 221 (e.g., the front plate 202 of FIG. 2 or 3) and a display panel 223. The display panel 223 may be disposed on the inner surface of the window plate 221 and may output visual information using substantially the entire area of the window plate 221.

According to an embodiment, the electronic device 101 may include an audio hole 213 (e.g., the audio hole 213 of FIGS. 2 and 3) and a key input device 218 (e.g., the key input device 218 of FIGS. 2 and 3) disposed on the side structure 211. The electronic device 101 may include a plurality of through holes 213 and 218 formed to penetrate through at least a portion of the side structure 211.

According to an embodiment, a processor (e.g., the processor 120 of FIG. 1), memory (e.g., the memory 130 of FIG. 1), and/or an interface (e.g., the interface 177 of FIG. 1) may be disposed on the printed circuit board 203 disposed as a first circuit board or a main circuit board. The processor may include, e.g., one or more of a central processing unit, an application processor, a graphics processing unit, an image signal processor, a sensor hub processor, or a communication processor. In an embodiment, the processor or a communication module may be mounted on an electronic component 255 such as an integrated circuit chip and disposed on the printed circuit board 203. For example, the electronic component 255 may be disposed on the printed circuit board 203 through a surface mounting process and may perform wireless communication using the antenna 253 and/or a portion of the side structure 211. According to an embodiment, the electronic device 101 may include a storage device (e.g., memory) such as a hard disk drive (HDD) or a solid state drive (SSD).

According to an embodiment, the memory may include, e.g., a volatile memory or a non-volatile memory.

According to an embodiment, the interface may include, e.g., a high definition multimedia interface (HDMI), a universal serial bus (USB) interface, a secure digital (SD) card interface, and/or an audio interface. The interface may, e.g., electrically or physically connect the electronic device 101 to an external electronic device, and may include a USB connector, an SD card/MMC connector, or an audio connector.

According to an embodiment, the battery 204 (e.g., the battery 189 of FIG. 1) is a device for supplying power to at least one component of the electronic device 101 and may include, e.g., a non-rechargeable primary battery, a rechargeable secondary battery, or a fuel cell. At least a portion of the battery 204 may be disposed on substantially the same plane as the printed circuit board 203, for example. The battery 204 may be integrally disposed inside the electronic device 101 or may be detachably disposed with the electronic device 101.

According to an embodiment, the antenna 253 (e.g., the antenna module 197 of FIG. 1) may be disposed at an edge inside the housing 210, e.g., adjacent to the side structure 211. In an embodiment, a plurality of antennas 253 may be disposed at appropriate positions along the edge inside the housing 210. In an embodiment, the illustrated antenna 253 may perform millimeter wave (mmWave) communication using a frequency of tens of GHz or higher. In an embodiment, although not illustrated, the electronic device 101 may further include a flat plate-shaped antenna disposed between the rear plate 212 and the battery 204. The flat plate-shaped antenna may include a conductive wire or a printed circuit pattern disposed on a plane to form a loop structure, and may function as, e.g., a near field communication (NFC) antenna, a wireless charging antenna, and/or a magnetic secure transmission (MST) antenna. For example, the flat antenna may perform short-range communication with, e.g., an external device or may wirelessly transmit or receive power necessary for charging.

According to an embodiment, the speaker module 251 may be disposed inside the electronic device 101. The speaker module 251 may be disposed adjacent to the audio hole 213 formed in the side structure 211. The speaker module 251 may include a sound output module (e.g., the sound output module 155 of FIG. 1 or the sound output module 352 of FIG. 5) disposed in the speaker module 251. The sound output module may output a sound or a sound signal to an outside of the electronic device 101 through a conduit (e.g., the conduit 354 of FIG. 5) of the speaker module 251 and a sound hole (e.g., the sound hole 313 of FIG. 5).

FIG. 5 is a cross-sectional view taken along line A-A' of FIG. 3, according to an embodiment of the disclosure.

FIG. 6 is an enlarged view illustrating portion B of FIG. 5 according to an embodiment of the disclosure.

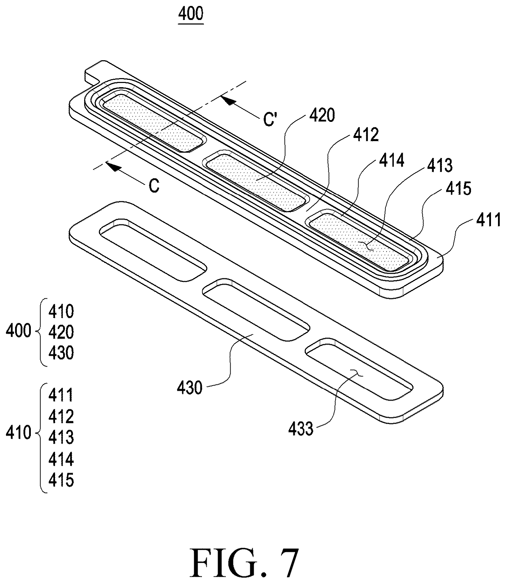

FIG. 7 is a perspective view illustrating a sealing structure according to an embodiment of the disclosure.

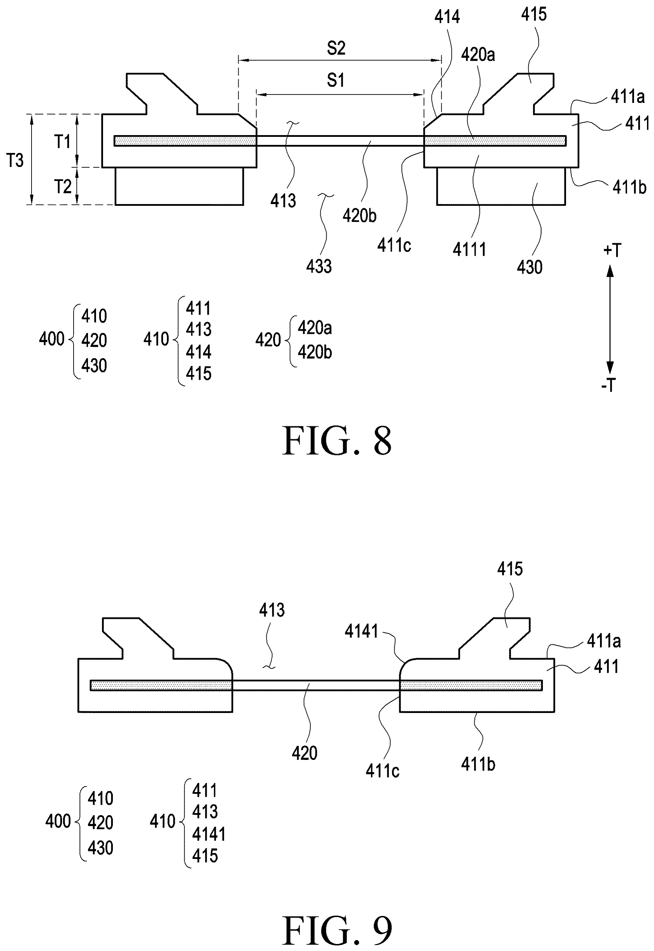

FIG. 8 is a cross-sectional view illustrating the sealing structure taken along line C-C' of FIG. 7, according to an embodiment of the disclosure.

The embodiments of FIGS. 5 and 8 may be combined with the embodiments of FIGS. 1 to 4 or the embodiments of FIGS. 9 to 11.

Referring to FIGS. 5 to 8, an electronic device 101 (e.g., the electronic device 101 of FIG. 1, the electronic device 101 of FIGS. 2 to 3, or the electronic device 101 of FIG. 4) may include a housing 310 (e.g., the housing 210 of FIG. 4), a display 320 (e.g., the display 220 of FIG. 4), a speaker module 350, an adhesive member 380, or a sealing structure 400.

According to an embodiment, the housing 310 may include a side structure 311 (e.g., the side structure 211 of FIG. 4) or a rear plate 312 (e.g., the rear plate 212 of FIG. 4). The side structure 311 and/or the rear plate 312 may include a metallic material and/or a non-metallic material (e.g., polymer). For example, the housing 310 may include a non-metallic region 314 including a non-metallic material. The non-metallic region 314 may be defined and/or referred to as an injection region formed in the side structure 311 and/or the rear plate 312 through an injection process.

According to an embodiment, the display 320 may include a window plate 321 (e.g., the window plate 221 of FIG. 4) or a display panel 323 (e.g., the display panel 223 of FIG. 4). The window plate 321 may be defined as a portion of a configuration of the housing 310 and may be referred to as a front plate of the housing 310.

According to an embodiment, the adhesive member 380 may adhere the window plate 321 to the housing 310 (e.g., the side structure 311). The adhesive member 380 may include a double-sided tape, an adhesive, or a bond.

According to an embodiment, an inner space of the electronic device 101 may be defined as a space surrounded by the window plate 321, the side structure 311, and/or the rear plate 312. Various electrical/electronic components of the electronic device 101 may be disposed in the inner space of the electronic device 101.

According to an embodiment, the housing 310 may further include a sound hole 313 (e.g., the audio hole 213 of FIG. 4) formed in the side structure 311. The sound hole 313 may include a hole formed to penetrate through the side structure 311. The sound hole 313 may form a passage through which a sound signal provided from the speaker module 350 is output to an outside of the electronic device 101. The sound hole 313 may be connected to the conduit 354 of the speaker module 350. The sound hole 313 may be provided in a plurality.

According to an embodiment, the speaker module 350 (e.g., the speaker module 251 of FIG. 4) may be disposed inside the housing 310. The speaker module 350 may be disposed adjacent to the sound hole 313. The speaker module 350 may include a sound housing 351 forming an exterior of the speaker module 350 or a sound output module 352 (e.g., the sound output module 155 of FIG. 1) disposed inside the sound housing 351.

According to an embodiment, the sound output module 352 may be configured to output a sound or a sound signal. The sound output module 352 may include a speaker. A sound output from the sound output module 352 may be output to an outside of the electronic device 101 through the conduit 354 and the sound hole 313.

According to an embodiment, the sound housing 351 may include a first sound housing 351a and a second sound housing 351b coupled to the first sound housing 351a. The first sound housing 351a may include a non-metallic material (e.g., polymer). The second sound housing 351b may include a metallic material. The first sound housing 351a and the second sound housing 351b may be integrally formed. The second sound housing 351b may be configured to block noise so that electromagnetic noise is not transmitted between the sound output module 352 and electrical/electronic components inside the electronic device 101 by including a metallic material. For example, the second sound housing 351b may be referred to as a shielding housing.

According to an embodiment, the sound housing 351 may include a conduit 354 for transmitting a sound signal provided from the sound output module 352 to the sound hole 313. The conduit 354 may face the sound hole 313 with the mesh member 420 interposed therebetween. The conduit 354 may be formed inside the sound housing 351 and may extend from the sound output module 352 to the sound hole 313. The conduit 354 may provide a passage for outputting the sound signal.

According to an embodiment, the speaker module 350 may further include a resonance space 353. The resonance space 353 may be a space formed between the first sound housing 351a and the second sound housing 351b. The resonance space 353 may provide a space in which a sound generated from the sound output module 352 may resonate.

According to an embodiment, the sealing structure 400 may be disposed inside the housing 310. The sealing structure 400 may be located between at least a portion of the housing 310 and the speaker module 350. For example, the sealing structure 400 may be located between the sound hole 313 and the speaker module 350. The sealing structure 400 may be referred to as a sealing member 400. The sealing structure 400 may be applied to the electronic device 101 such as a tablet PC illustrated in FIGS. 2 to 5, but the disclosure is not limited thereto. For example, the sealing structure 400 may be applied to a smartphone, a foldable electronic device, a rollable electronic device, or various electronic devices.

According to an embodiment, the sealing structure 400 may be configured to block foreign objects and/or moisture from entering an inside of the electronic device 101.

According to an embodiment, the sealing structure 400 may include an elastic member 410, a mesh member 420, or an adhesive member 430.

According to an embodiment, the elastic member 410 may be disposed to cover the sound hole 313. For example, the elastic member 410 may be located between the sound hole 313 and the conduit 354. The elastic member 410 may tightly contact at least a portion of the housing 310 and the sound housing 351.

According to an embodiment, the elastic member 410 may include a rubber material or a silicon material. The elastic member 410 may be located between the sound hole 313 and the conduit 354 and may be compressed by the sound housing 351. The elastic member 410 may be configured to cover at least a portion of the mesh member 420.

According to an embodiment, the elastic member 410 may include a body portion 411, at least one first opening 413, or a protruding portion 415.

According to an embodiment, the body portion 411 may be formed in an elongated shape to cover the sound hole 313. The body portion 411 may include a first surface (e.g., the first surface 411a of FIG. 9) in tight contact with the sound housing 351 and a second surface (e.g., the second surface 411b of FIG. 9) in tight contact with at least a portion of the housing 310.

According to an embodiment, at least one first opening 413 may be formed in the body portion 411. The at least one opening 413 may include a hole formed to penetrate from the first surface 411a of the body portion 411 to the second surface 411b. The at least one first opening 413 may be located to correspond to the sound hole 313 and the conduit 354. For example, as the at least one first opening 413 is located between the sound hole 313 and the conduit 354, a sound output from the sound output module 352 may be output to an outside of the electronic device 101 through the conduit 354, the at least one first opening 413, and the sound hole 313. The at least one first opening 413 may be interpreted as being defined or formed by the body portion 411 and a connecting portion 412. According to an embodiment, the at least one first opening 413 may have an overall rectangular cross-sectional shape (see FIG. 7). The cross-sectional shape of the at least one first opening 413 is not limited thereto and may have a triangular shape, a circular shape, an elliptical shape, various polygonal shapes, or various shapes.

According to an embodiment, the elastic member 410 may further include a connecting portion 412. The connecting portion 412 may be disposed to separate (or partition) the plurality of openings 413 when the at least one first opening 413 is provided in a plurality. The connecting portion 412 may be configured to connect long sides of the body portion 411 that face each other. The connecting portion 412 may limit or reduce excessive deformation of a shape of the body portion 411 when the sealing structure 400 is coupled or installed in the electronic device 101.

According to an embodiment, the protruding portion 415 may protrude from the first surface 411a of the body portion 411. The protruding portion 415 may have an elongated shape extending along an outer edge (or periphery) of the body portion 411. The protruding portion 415 may have a loop shape. When the sealing structure 400 is coupled or installed in the electronic device 101, the protruding portion 415 may tightly contact an outer surface of the sound housing 351. The protruding portion 415 may be pressed by the sound housing 351 and may be at least partially compressed. As the protruding portion 415 is in tight contact with the outer surface of the sound housing 351, a space between the sound housing 351 and the sealing structure 400 may be sealed.

According to an embodiment, the mesh member 420 may include a mesh of a breathable material. According to an embodiment, the mesh member 420 may limit liquid and/or foreign objects from entering the conduit 354 of the sound housing 351. For example, the mesh member 420 may limit or reduce liquid and/or foreign objects from outside the electronic device 101 from entering the conduit 354 of the sound housing 351 through the sound hole 313. The mesh member 420 may include a mesh that allows inflow of liquid and does not allow inflow of foreign objects. For example, the mesh member 420 may allow liquid to enter an inside of the sound housing 351 and may not allow foreign objects to enter the inside of the sound housing 351. For example, liquid that has entered the inside of the sound housing 351 may be blocked from entering an inside of the electronic device 101 through a space between the sound housing 351 and the protruding portion 415 as the sound housing 351 and the protruding portion 415 are in tight contact.

According to an embodiment, the elastic member 410 and the mesh member 420 may be integrally formed. For example, the elastic member 410 may be formed on the mesh member 420 through an insert injection process. The elastic member 410 may be configured to cover at least a portion of the mesh member 420.

According to an embodiment, at least a portion 420a of the mesh member 420 may be located or inserted inside the body portion 411. For example, the at least a portion 420a of the mesh member 420 may be surrounded by the body portion 411. At least a portion of the elastic member 410 may be impregnated in the at least a portion 420a of the mesh member 420 located or inserted inside the body portion 411. For example, the mesh member 420 may include a lattice structure, and at least a portion of the lattice structure located in the at least a portion 420a of the mesh member 420 may be impregnated with at least a portion of the elastic member 410 of a rubber material or a silicon material.

According to an embodiment, a remaining portion 420b of the mesh member 420 may be located in the at least one first opening 413. The remaining portion 420b of the mesh member 420 may be located between the conduit 354 and the sound hole 313.

According to an embodiment, the adhesive member 430 may be disposed between at least a portion of the housing 310 and the elastic member 410. The adhesive member 430 may include a double-sided tape, an adhesive, or a bond. The adhesive member 430 may adhere the elastic member 410 to at least a portion of the housing 310. For example, the adhesive member 430 may adhere the elastic member 410 to at least a portion of an inner surface (e.g., a surface facing an inside of the electronic device 101) of the housing 310.

According to an embodiment, the adhesive member 430 may include at least one second opening 433. The at least one second opening 433 may be formed or located to correspond to the at least one first opening 413 of the elastic member 410. The at least one second opening 433 may include a hole formed to penetrate through at least a portion of the adhesive member 430. The number of the at least one second opening 433 may be the same as the number of the at least one first opening 413. The at least one second opening 433 may be aligned with the at least one first opening 413.

According to an embodiment, the elastic member 410 may further include a cutting portion 414. The cutting portion 414 may be configured to enlarge a size of the at least one first opening 413. For example, the size of the at least one first opening 413 may be enlarged in a direction away from the mesh member 420. For example, the size of the at least one first opening 413 may be enlarged by the cutting portion 414 in a direction from the mesh member 420 toward the conduit 354.

According to an embodiment, the body portion 411 may include an inner surface 411c defining the at least one first opening 413. The inner surface 411c may surround the at least one first opening 413. One edge of the inner surface 411c may be connected to an edge of the first surface 411a. The other edge of the inner surface 411c may be connected to an edge of the second surface 411b. The inner surface 411c may be defined and/or referred to as a third surface of the body portion 411.

According to an embodiment, the cutting portion 414 may be formed in at least a portion of the body portion 411. The cutting portion 414 may be formed at an edge of the inner surface 411c. The cutting portion 414 may be formed at an inner edge of the first surface 411a. For example, the cutting portion 414 may be formed at an edge connecting the inner surface 411c and the first surface 411a. For example, the cutting portion 414 may be formed by cutting at least a portion of an edge (or corner) where the inner surface 411c defining the at least one first opening 413 and the first surface 411a are connected. The cutting portion 414 may include an inclined surface inclined with respect to the first surface 411a and/or the inner surface 411c. As the cutting portion 414 is provided, the size of the at least one first opening 413 may be variable in a direction from the mesh member 420 toward the sound housing 351. For example, the size of the at least one first opening 413 may gradually increase in a direction from the mesh member 420 toward the sound housing 351. For example, the size S1 of the at least one first opening 413 located on the exposed portion 420b of the mesh member 420 may be smaller than the size S2 of the at least one first opening 413 located on the cutting portion 414. A sound passing through the at least one first opening 413 from the conduit 354 may not be interfered with by the edge of the body portion 411 as the cutting portion 414 is provided. Accordingly, performance of a sound output to an outside of the electronic device 101 may be enhanced. For example, as the cutting portion 414 is provided, frequency response characteristics of a sound output from the sound output module 352 may be enhanced.

According to an embodiment, the body portion 411 may have a first thickness T1 in a first direction (e.g., a T-axis direction of FIG. 8). The first direction may be a direction from the first surface 411a toward the second surface 411b or a direction from the second surface 411b toward the first surface 411a. The first direction may be defined and/or referred to as a thickness direction of the sealing structure 400. The first thickness T1 may be about 0.44 mm to about 0.54 mm (millimeter). For example, the first thickness T1 may be about 0.49 mm.

According to an embodiment, the adhesive member 430 may have a second thickness T2 in the first direction. The second thickness T2 may be smaller than the first thickness T1. The second thickness T2 may be about 0.18 mm to about 0.22 mm. For example, the second thickness T2 may be about 0.20 mm.

According to an embodiment, an overall thickness of the sealing structure 400 may be a third thickness T3 that is a sum of the first thickness T1 and the second thickness T2. The third thickness T3 may be about 0.62 mm to about 0.76 mm. For example, the third thickness T3 may be about 0.69 mm.

According to an embodiment, as the elastic member 410 and the mesh member 420 are integrally formed, the thickness T3 of an assembly of the mesh member 420 and the body portion 411 in the first direction may be the first thickness T1. For example, since the mesh member 420 is integrally provided with the elastic member 410, an overall size or thickness of the elastic member 410 and the mesh member 420 may be decreased. For example, when a mesh member is adhered to an elastic member (or body portion) through a separate adhesive member, a thickness of the mesh member forms a separate thickness from a thickness of the elastic member, so that a thickness of an assembly of the mesh member and the elastic member may be excessively large. In such a case, two adhesive members are required, which are an adhesive member for adhering the mesh member and the elastic member and an adhesive member for adhering the assembly of the mesh member and the elastic member to the housing, so that an overall thickness of a sealing structure may be excessively large.

According to an embodiment, since the mesh member 420 is integrally formed with the elastic member 410, an adhesive member for adhering the mesh member 420 to the elastic member 410 may not be required. Further, since the mesh member 420 is integrally formed with the elastic member 410, a thickness of the assembly of the mesh member 420 and the elastic member 410 may be decreased. Accordingly, an additional space for mounting other electrical/electronic components inside the electronic device 101 may be secured.

According to an embodiment, since the mesh member 420 is integrally formed with the elastic member 410, at least a portion 4111 of the elastic member 410 (or the body portion 411) may be located between the mesh member 420 and the adhesive member 430.

FIG. 9 is a cross-sectional view illustrating a sealing structure according to an embodiment of the disclosure.

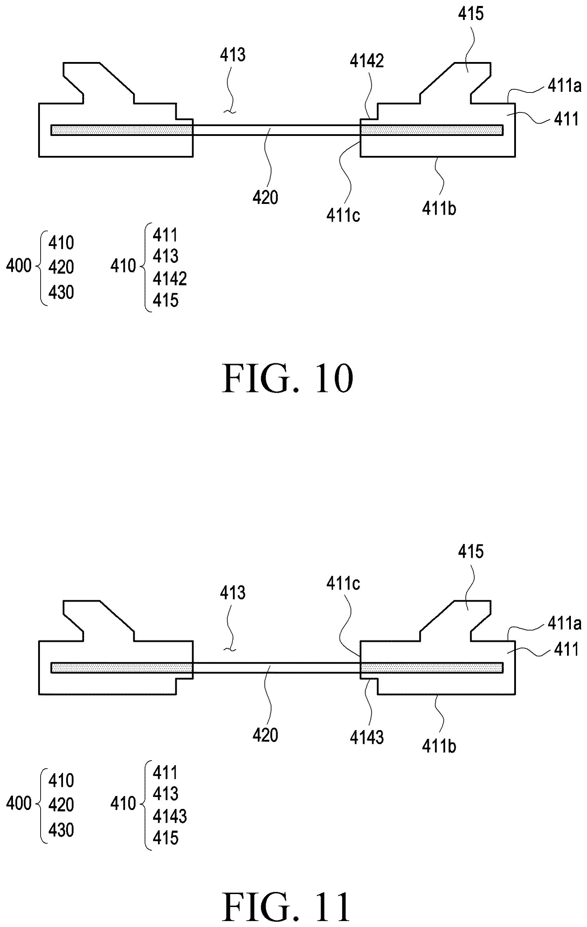

FIG. 10 is a cross-sectional view illustrating a sealing structure according to an embodiment of the disclosure.

FIG. 11 is a cross-sectional view illustrating a sealing structure according to an embodiment of the disclosure.

The embodiments of FIGS. 9 to 11 may be combinable with the embodiments of FIGS. 1 to 8.

Referring to FIGS. 9 to 11, a sealing structure 400 (e.g., the sealing structure 400 of FIGS. 5 to 8) may include an elastic member 410 (e.g., the elastic member 410 of FIGS. 7 to 8) or a mesh member 420 (e.g., the mesh member 420 of FIGS. 7 to 8).

According to an embodiment, the elastic member 410 may include a body portion 411 (e.g., the body portion 411 of FIGS. 7 to 8), at least one first opening 413 (e.g., the at least one first opening 413 of FIGS. 7 to 8), or a protruding portion 415 (e.g., the protruding portion 415 of FIGS. 7 to 8). The body portion 411 may include a first surface 411a (e.g., the first surface 411a of FIGS. 7 to 8), a second surface 411b (e.g., the second surface 411b of FIGS. 7 to 8), or an inner surface 411c (e.g., the inner surface 411c of FIGS. 7 to 8).

According to an embodiment, the elastic member 410 may include a cutting portion 4141, 4142, or 4143 (e.g., the cutting portion 414 of FIGS. 7 to 8).

Referring to FIG. 9, the cutting portion 4141 may be formed at an edge connecting the first surface 411a and the inner surface 411c. The cutting portion 4141 may be configured to enlarge a size of the at least one first opening 413. For example, the size of the at least one first opening 413 may be enlarged in a direction away from the mesh member 420. For example, the size of the at least one first opening 413 may be enlarged by the cutting portion 4141 in a direction from the mesh member 420 toward a conduit (e.g., the conduit 354 of FIGS. 6 to 7). The cutting portion 4141 may include a curved surface curved with respect to the inner surface 411c and/or the first surface 411a.

Referring to FIG. 10, the cutting portion 4142 may be formed at an edge connecting the first surface 411a and the inner surface 411c. The cutting portion 4142 may be configured to enlarge a size of the at least one first opening 413. For example, the size of the at least one first opening 413 may be enlarged in a direction away from the mesh member 420. For example, the size of the at least one first opening 413 may be enlarged by the cutting portion 4142 in a direction from the mesh member 420 toward a conduit (e.g., the conduit 354 of FIGS. 6 to 7). The cutting portion 4142 may include a stepped surface stepped with respect to the inner surface 411c and/or the first surface 411a.

Referring to FIG. 11, the cutting portion 4143 may be formed at an edge connecting the second surface 411b and the inner surface 411c. The cutting portion 4143 may be configured to enlarge a size of the at least one first opening 413. For example, the size of the at least one first opening 413 may be enlarged in a direction away from the mesh member 420. For example, the size of the at least one first opening 413 may be enlarged by the cutting portion 4143 in a direction from the mesh member 420 toward a sound hole (e.g., the sound hole 313 of FIGS. 6 to 7). The cutting portion 4143 may include a stepped surface stepped with respect to the inner surface 411c and/or the second surface 411b.

Positions or shapes of the cutting portions 414, 4141, 4142, and 4143 illustrated in FIGS. 8 to 11 are exemplary, and positions or shapes of the cutting portion of the disclosure are not limited thereto. The position or shape of the cutting portion of the disclosure may have various positions or shapes capable of enhancing performance of a sound output from a sound output module (e.g., the sound output module 352 of FIGS. 5 to 6).

An electronic device may include a sound output module capable of outputting a sound signal to an outside of the electronic device. In order for a sound signal to be output to an outside of the electronic device, a sound through hole may be formed in a portion of a housing forming an exterior of the electronic device.

Further, the electronic device may include various components to provide various functions to a user. The electronic device may require a waterproof structure that limits (or prevents) foreign objects and/or liquid from entering from the outside with respect to the various components.

As integration of the electronic device increases, the electronic device may include various components and a waterproof structure, and thus it may be difficult to sufficiently secure an inner space for mounting components of the electronic device.

According to an embodiment of the disclosure, since a downsized sealing structure is provided, an electronic device in which a space for mounting components of the electronic device may be secured may be provided.

According to an embodiment of the disclosure, a sealing structure that blocks foreign objects and/or moisture from entering electrical/electronic components of the electronic device and an electronic device including the same may be provided.

However, problems to be solved by the disclosure are not limited to the problems mentioned above, and may be variously determined in a range that does not depart from the spirit and scope of the disclosure.

According to an embodiment of the disclosure, since a cutting portion of the sealing structure extends a path of a sound output from a sound output module, an electronic device with enhanced sound performance may be provided.

Effects obtainable from the disclosure are not limited to the effects mentioned above, and other effects not mentioned may be clearly understood by those skilled in the art to which the disclosure pertains from the description below.

According to an embodiment of the disclosure, an electronic device 101 may include a housing 310, a sound housing 351, a sound output module 352, or a sealing structure 400. The housing 310 may include at least one sound hole 313. The sound housing 351 may be disposed in the housing 310. The sound housing 351 may include a conduit 354. The sound output module 352 may be disposed in the sound housing 351. The sound output module 352 may be configured to output a sound to an outside of the electronic device 101 through the conduit 354 and the at least one sound hole 313. The sealing structure 400 may be disposed between the conduit 354 and the at least one sound hole 313. The sealing structure 400 may include an elastic member 410, a mesh member 420, or an adhesive member 430. The mesh member 420 may be integrally formed with the elastic member 410. The adhesive member 430 may be configured to adhere to the elastic member 410 and the housing 310. The elastic member 410 may include a body portion 411 or at least one first opening 413. The at least one first opening 413 may be formed in the body portion 411. A size of the at least one first opening 413 may be enlarged in a direction away from the mesh member 420.

According to an embodiment, the elastic member 410 may be configured to cover at least a portion of the mesh member 420. At least a portion 4111 of the elastic member 410 may be located between the mesh member 420 and the adhesive member 430.

According to an embodiment, the body portion 411 may include a first surface 411a or a second surface 411b. The second surface 411b may be opposite to the first surface 411a. The elastic member 410 may further include a protruding portion 415. The protruding portion 415 may protrude from the first surface 411a.

According to an embodiment, the protruding portion 415 may tightly contact the sound housing 351.

According to an embodiment, the body portion 411 may further include an inner surface 411c. The inner surface 411c may define the at least one first opening 413. The elastic member 410 may further include a cutting portion 414. The cutting portion 414 may be formed at an edge of the inner surface 411c. The size of the at least one first opening 413 may be enlarged in the direction away from the mesh member 420 by the cutting portion 414.

According to an embodiment, the cutting portion 414 may be formed at the edge which is defined by the inner surface 411c and the first surface 411a.

According to an embodiment, the cutting portion 4143 may be formed at the edge which is defined by the inner surface 411c and the second surface 411b.

According to an embodiment, the cutting portion 414 may include an inclined surface inclined with respect to the inner surface 411c.

According to an embodiment, the cutting portion 4141 may include a curved surface curved with respect to the inner surface 411c.

According to an embodiment, the cutting portion 4142 or 4143 may include a stepped surface stepped with respect to the inner surface 411c.

According to an embodiment, the body portion 411 may have a first thickness T1 in a direction from the first surface 411a toward the second surface 411b. The adhesive member 430 may have a second thickness T2 in the direction. The second thickness T2 may be smaller than the first thickness T1.

According to an embodiment, the adhesive member 430 may include at least one second opening 433. The at least one second opening 433 may be located to correspond to the at least one first opening 413.

According to an embodiment, the electronic device 101 may further include a display 320. The display 320 may be disposed at the housing 310.

According to an embodiment, at least a portion 420a of the mesh member 420 may be surrounded by the body portion 411. A remaining portion 420b of the mesh member 420 may be located on the at least one first opening 413.

According to an embodiment, the conduit 354 may extend from the sound output module 352 to the at least one first opening 413.

According to an embodiment of the disclosure, a sealing structure 400 of an electronic device 101 may include an elastic member 410 or a mesh member 420. The elastic member 410 may include a body portion 411, at least one first opening 413, or a protruding portion 415. The at least one first opening 413 may be formed in the body portion 411. The protruding portion 415 may protrude from the body portion 411. The mesh member 420 may be integrally formed with the elastic member 410. At least a portion 420a of the mesh member 420 may be surrounded by the body portion 411. A remaining portion 420b of the mesh member 420 may be located on the at least one first opening 413.

According to an embodiment, the body portion 411 may include a first surface 411a, a second surface 411b, or an inner surface 411c. The second surface 411b may be opposite to the first surface 411a. The inner surface 411c may define the at least one first opening 413. The protruding portion 415 may protrude from the first surface 411a. A size of the at least one first opening 413 may be enlarged in a direction away from the mesh member 420.

According to an embodiment, the elastic member 410 may further include a cutting portion 414. The cutting portion 414 may be formed at an edge of the inner surface 411c.

According to an embodiment, the cutting portion 414 may be formed at the edge which is defined by the inner surface 411c and the first surface 411a.

According to an embodiment, the cutting portion 4143 may be formed at the edge which is defined by the inner surface 411c and the second surface 411b.

While the disclosure has been shown and described with reference to exemplary embodiments thereof, it will be apparent to those of ordinary skill in the art that various changes in form and detail may be made thereto without departing from the spirit and scope of the disclosure as defined by the following claims.

## Claims

1. An electronic device (101) comprising:
a housing (310) including at least one sound hole (313);
a sound housing (351) disposed in the housing (310) and including a conduit (354);
a sound output module (352) disposed in the sound housing (351) and configured to output a sound to an outside of the electronic device (101) through the conduit (354) and the at least one sound hole (313); and
a sealing structure (400) disposed between the conduit (354) and the at least one sound hole (313) and including an elastic member (410), a mesh member (420) integrally formed with the elastic member (410) and an adhesive member (430) configured to adhere to the elastic member (410) and the housing (310),
wherein the elastic member (410) includes:
a body portion (411); and
at least one first opening (413) formed in the body portion (411),
wherein a size of the at least one first opening (413) is enlarged in a direction away from the mesh member (420).

2. The electronic device of claim 1, wherein the elastic member (410) is configured to cover at least a portion of the mesh member (420), and
wherein at least a portion (4111) of the elastic member (410) is located between the mesh member (420) and the adhesive member (430).

3. The electronic device of claim 1 or 2, wherein the body portion (411) includes a first surface (411a) and a second surface (411b) opposite to the first surface (411a), and
wherein the elastic member (410) further includes a protruding portion (415) protruding from the first surface (411a).

4. The electronic device of any one of claims 1 to 3, wherein the protruding portion (415) is in close contact with the sound housing (351).

5. The electronic device of any one of claims 1 to 4, wherein the body portion (411) further includes an inner surface (411c) defining the at least one first opening (413),
wherein the elastic member (410) further includes a cutting portion (414) formed at an edge of the inner surface (411c), and
wherein the size of the at least one first opening (413) is enlarged in the direction away from the mesh member (420) by the cutting portion (414).

6. The electronic device of any one of claims 1 to 5, wherein the cutting portion (414) is formed at the edge which is defined by the inner surface (411c) and the first surface (411a).

7. The electronic device of any one of claims 1 to 5, wherein the cutting portion (4143) is formed at the edge which is defined by the inner surface (411c) and the second surface (411b).

8. The electronic device of any one of claims 1 to 7, wherein the cutting portion (414) includes an inclined surface inclined with respect to the inner surface (411c).

9. The electronic device of any one of claims 1 to 7, wherein the cutting portion (4141) includes a curved surface curved with respect to the inner surface (411c).

10. The electronic device of any one of claims 1 to 7, wherein the cutting portion (4142, 4143) includes a stepped surface stepped with respect to the inner surface (411c).

11. The electronic device of any one of claims 1 to 10, wherein the body portion (411) has a first thickness (T1) in a direction from the first surface (411a) toward the second surface (411b),
wherein the adhesive member (430) has a second thickness (T2) in the direction, and
wherein the second thickness (T2) is smaller than the first thickness (T1).

12. The electronic device of any one of claims 1 to 11, wherein the adhesive member (430) includes at least one second opening (433), and
wherein the at least one second opening (433) is located to correspond to the at least one first opening (413).

13. The electronic device of any one of claims 1 to 12, further comprising a display (320) disposed at the housing (310).

14. The electronic device of any one of claims 1 to 13, wherein at least a portion (420a) of the mesh member (420) is surrounded by the body portion (411), and
wherein a remaining portion (420b) of the mesh member (420) is located on the at least one first opening (413).

15. The electronic device of any one of claims 1 to 14, wherein the conduit (354) extends from the sound output module (352) to the at least one first opening (413).
